# EUROPEAN PATENT APPLICATION

(11) **EP 4 592 933 A1**
(43) Date of publication of application: **30.07.2025**
(21) Application number: 25153478.0
(22) Date of filing: 23.01.2025
(51) Int. Cl.: G06Q 30/0242, G06Q 30/0241

(54) **AGGREGATED MEDIA PERFORMANCE CALCULATION SYSTEM AND ASSOCIATED METHODS**

(30) Priority: 23.01.2024 US 202418420240
(71) Applicant: adMarketplace, Inc., New York, NY 10018 (US)
(72) Inventor: Hill, James W., New York, 10018 (US); Epstein, Adam J., New York, 10018 (US); Stevenson, Jared, New York, 10018 (US); Read, Steven, New York, 10018 (US)
(74) Representative: Praxi Intellectual Property Milano

(57) **Abstract**

A computer implemented system for generation of performance analysis of digital advertising carried out on a global communications network that may be accessible by consumers is provided. The system may include a processor and one or more of a client database. The client database may include client data stored thereon. The client data may include a conversion rate, an average order value, and/or an incremental lift rate. The processor may be configured to identify a conversion rate score, identify an average order value score, and identify an incremental lift rate score. The processor may further be configured to generate an aggregated media value score that may be based on the conversion rate score, the average order value score, and the incremental lift rate score. The processor may also be configured to broadcast the aggregated media value score to a receiver.

## Description

### Field of the invention

The present invention relates to systems and methods for generating performance analysis and statistics of digital advertising via a global communications network.

### Background of the invention

On-line publishers, including media publishers, advertisers, and on-line transaction entities, seek guidance in understanding their media value, influence, and interaction between the on-line publishers' website(s) and a visitor of the websites' journey towards a purchase event, subscription, or other interaction with that On-line publishers' website. The prior art fails to provide a standard performance measurement scale and format that allows on-line publishers to be fully informed as to its media value, influence, and interaction between its website and visitors of that website. The prior art also fails to provide an accurate measurement as to on-line publishers' media value, influence, and interaction between its website and visitors of that website.

The prior art fails to provide on-line publishers with clear insights and guidance as to the current performance of its websites' interaction with visitors and fails to provide on-line publishers with projections of changes to the performance of its website upon changes in its advertisement strategy. Furthermore, the prior art fails to provide on-line publishers a performance measurement scale that can show a comparison across an entire market group without the risk of violating data security of the on-line publishers of that market group. Therefore, there exists a need for on-line publishers to be provided a standard, accurate, and data secure performance measurement of its website(s) to provide clear insights and guidance as to such performance and how to improve its marketing strategy with comparison to other on-line marketing strategies to improve such performance.

This background information is provided to reveal information believed by the applicant to be of possible relevance to the present invention. No admission is necessarily intended, nor should be construed, that any of the preceding information constitutes prior art against the present invention.

### Summary of the invention

With the above in mind, embodiments of the present invention are related to a computer implemented system for generation of performance analysis of digital advertising carried out on a global communications network that may be accessible by consumers. The system may include a client database. The system may also include a processor in communication with the client database. The client database may include client data stored thereon.

The client data may include one or more of a conversion rate, an average order value, and an incremental lift rate. The processor may be configured to receive the client data from the client database and to identify a conversion rate score that may be based on the conversion rate. The processor may also be configured to identify an average order value score that may be based on the average order value. The processor may further be configured to identify an incremental lift rate score that may be based on the incremental lift rate.

The processor may yet further be configured to generate an aggregated media value score that may be based on a combination, or a selective combination, of the conversion rate score, the average order value score, and the incremental lift rate score. The processor may also be configured to broadcast the aggregated media value score to a receiver.

In some embodiments of the present invention the processor may be configured to selectively provide access to the aggregated media value score via the receiver. The aggregated media value score may be displayed via the receiver. In some embodiments of the present invention, the client data may further include one or more of a return on digital advertisement spending data, incremental return on digital advertisement spending data, number of products sold via a digital marketplace, product price, website clicks, digital search engine data, product type, and a digital publisher type, which may each be defined as a client data subset. The processor may be further configured to generate the aggregated media value score that may be based on a combination of, or a selective combination of, the media data subset, the conversion rate score, the average order value score, and the incremental lift rate score.

In some embodiments of the present invention, the processor may be further configured to identify and exclude outliers within the client data. In other embodiments of the present invention, the average order value, and the incremental lift rate may be each associated with a predetermined product, and the average order value and the incremental lift rate may be selectively paired with the predetermined product and may be stored in the client database as a predetermined product matched pair. In other embodiments of the present invention, the average order value and the incremental lift rate may be associated with a predetermined advertiser group. The average order value and the incremental lift rate may be selectively paired with the predetermined advertiser group and may be stored in the at least one client database as a predetermined advertiser group matched pair.

The client data may further include data relating to a legacy search conversion rate, a legacy search average order value, a revenue per click, a revenue per click index, and/or a seasonal factor. Identifying the conversion rate score may be further based on analysis of a selective combination of one conversion rate, the legacy search conversion rate, and the seasonal factor. Identifying the average order value score may be further based on an analysis of a selective combination of the average order value, the legacy search average order value, and the seasonal factor. Identifying the incremental lift rate score may be further based on an analysis of a selective combination of the incremental lift rate, the revenue per click, the revenue per click index, and the seasonal factor.

In some embodiments of the present invention, the processor may be further configured to identify an integration score. In some embodiments of the present invention, generating the aggregated media value score may be further based on an analysis of a selective combination of the conversion rate score, the average order value score, the incremental lift rate score, and the integration score.

In other embodiments of the present invention, the processor may be further configured to access a third-party digital database that may contain third-party data that may relate to digital advertisement performance relating to digital advertising of a predetermined product and receive the digital advertisement performance. The processor may be configured to compare the digital advertisement performance to the aggregated media value score. The aggregated media value score may have a format type. The processor may be configured to convert the third-party data to the format type of the aggregated media value score and may generate a score comparison based on the aggregated media value score and the converted third-party data. The processor may be further configured to broadcast the score comparison to the receiver. The score comparison may be display on the receiver.

A method aspect of the present invention is for generating performance analytics of digital advertising carried out on a global communications network that may be accessible by consumers. The method may include receiving client data that may be stored on one or more of a client database. The client data may include one or more of a conversion rate, an average order value, and an incremental lift rate. The method may further include identifying a conversion rate score that may be based on the conversion rate.

The method may also include identifying an average order value score that may be based on the average order value. The method may further include identifying an incremental lift rate score that may be based on the incremental lift rate. The method may still further include generating an aggregated media value score that may be based on a combination of the conversion rate score, the average order value score, and the incremental lift rate score. The method may also include broadcasting the aggregated media value score to a receiver.

The method may further include selectively providing access to the aggregated media value score via the receiver and displaying the aggregated media value score via the receiver. The client data may comprise one or more of a return on digital advertisement spending data, incremental return on digital advertisement spending data, number of products sold via a digital marketplace, product price, website clicks, digital search engine data, product type, and a digital publisher type, which may each be defined as a client data subset. Generating the aggregated media value score may be based upon a combination of, or a selective combination of, the media data subset, the conversion rate score, the average order value score, and the incremental lift rate score.

The method may further include identifying and excluding outliers within the client data received from the client database. The method may yet further include associating each of the average order value and the incremental lift rate with a predetermined product and selectively pairing the average order value and the incremental lift rate with the predetermined product that may be defined as a predetermined product matched pair. The method may also include and storing the predetermined product matched pair in the client database.

The method according to the present invention may further include associating each of the average order value and the incremental lift rate with a predetermined advertiser group and may include selectively pairing the average order value and the incremental lift rate with the predetermined advertiser group that may be defined as a predetermined advertiser matched pair. The method may yet further include storing the predetermined advertiser matched pair in the client database.

The client data may further comprise data that may relate to a legacy search conversion rate, a legacy search average order value, a revenue per click, a revenue per click index, and a seasonal factor. Identifying the conversion rate score may be further based on analysis of a selective combination of the conversion rate, the legacy search conversion rate, and the seasonal factor. Identifying the average order value score may be further based on an analysis of a selective combination of the average order value, the legacy search average order value, and the seasonal factor. Identifying the incremental lift rate score may be further based on an analysis of a selective combination of the incremental lift rate, the revenue per click, the revenue per click index, and a seasonal factor.

The method may further include identifying an integration score, and may include analyzing a selective combination of the conversion rate score, the average order value score, the incremental lift rate score, and the integration score. The method may yet further include identifying the aggregated media value score further based on the analysis of the selective combination.

The method may further include accessing a third-party digital database that may contain third-party data that may relate to digital advertisement performance relating to digital advertising of a predetermined product. The method may yet further include comparing the digital advertisement performance to the aggregated media value score. The aggregated media value score may have a format type. The method may further include converting the third-party data to the format type of the aggregated media value score. The method may also include generating a score comparison that may be based on the aggregated media value score and the converted third-party data. The method may further include broadcasting the score comparison to the receiver. The method may also include displaying the score comparison via the receiver.

### Brief Description of the Drawings

Some embodiments of the present invention are illustrated as an example and are not limited by the figures of the accompanying drawings, in which like references may indicate similar elements.
FIG. 1 is a schematic illustration of a computer implemented system according to an embodiment of the present invention and including a server, a network, client database, a third-party database, and a receiver.
FIG. 2A is a flowchart illustration of method aspects of an embodiment of the present invention.
FIG. 2B is a continuation of the flowchart of FIG. 2A illustrating further method aspects of an embodiment of the present invention.
FIG. 2C is a continuation of the flowchart of FIG. 2B illustrating further method aspects of an embodiment of the present invention.
FIG. 2D is a continuation of the flowchart of FIG. 2C illustrating further method aspects of an embodiment of the present invention.

### Detailed Description of the invention

The present invention will now be described more fully hereinafter with reference to the accompanying drawings, in which preferred embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. Those of ordinary skill in the art realize that the following descriptions of the embodiments of the present invention are illustrative and are not intended to be limiting in any way. Other embodiments of the present invention will readily suggest themselves to such skilled persons having the benefit of this disclosure. Like numbers refer to like elements throughout.

Although the following detailed description contains many specifics for the purposes of illustration, anyone of ordinary skill in the art will appreciate that many variations and alterations to the following details are within the scope of the invention. Accordingly, the following embodiments of the invention are set forth without any loss of generality to, and without imposing limitations upon, the claimed invention.

In this detailed description of the present invention, a person skilled in the art should note that directional terms, such as "above," "below," "upper," "lower," and other like terms are used for the convenience of the reader in reference to the drawings. Also, a person skilled in the art should notice this description may contain other terminology to convey position, orientation, and direction without departing from the principles of the present invention.

Furthermore, in this detailed description, a person skilled in the art should note that quantitative qualifying terms such as "generally," "substantially," "mostly," and other terms are used, in general, to mean that the referred to object, characteristic, or quality constitutes a majority of the subject of the reference. The meaning of any of these terms is dependent upon the context within which it is used, and the meaning may be expressly modified.

For the purposes of the present invention, "incremental lift rate" or "ILR" may be defined as an incremental measurement showing projected changes in marketing impact in response to a change of marketing strategy. For example, and without limitation, "ILR" may relate to revenue-per-click, revenue-per-click by category, media product, and section of time.

For the purposes of the present invention, "revenue-per-click" may be defined as the sum of purchase value(s) compared to the total count of valid clicks on a website.

For the purposes of the present invention, "aggregated media value score" may be defined as a rating scale that estimates projected percentage lift in incremental sales and performance when switching from a first advertisement provider to a second advertisement provider. For example, and without limitation, an aggregated media value score may be on a scale from one to one-hundred, with a score of fifty signaling equivalent projected percentage lift in incremental sales and performance when switching from a first advertisement provider to a second advertisement provider.

For the purposes of the present invention, "conversion rate" or "CVR" may be defined as a metric used in digital marketing to denote the percentage of visitors of a website, webpage, mobile app, or similar on-line service via a network that "convert."

For the purposes of the present invention, "convert" or "conversion" may be defined as a visitor or as visitors of a website, webpage, mobile app, or similar on-line service via a network by taking a desire action. For example, and without limitation, a visitor may "convert" by making a purchase, filling out an online form, or subscribing to the website, webpage, mobile app, or similar on-line service via a network.

For the purposes of the present invention, "average order value" or "AOV" may be defined as the average monetary amount spent each time a customer places an order on a webpage, website, mobile app, or similar or equivalent on-line service via a network.

For the purposes of the present invention, "seasonal factor" may be defined as a predetermined number used in calculations of embodiments of the present invention to normalize calculations made against seasonality changes in consumers, which may include a comparison of monthly average order value to annual average order value.

For the purposes of the present invention, "integration score" may be defined as an assessment of compliance of a publisher, merchant, advertiser, or retail service with an integration policy, which may be a publisher integration policy.

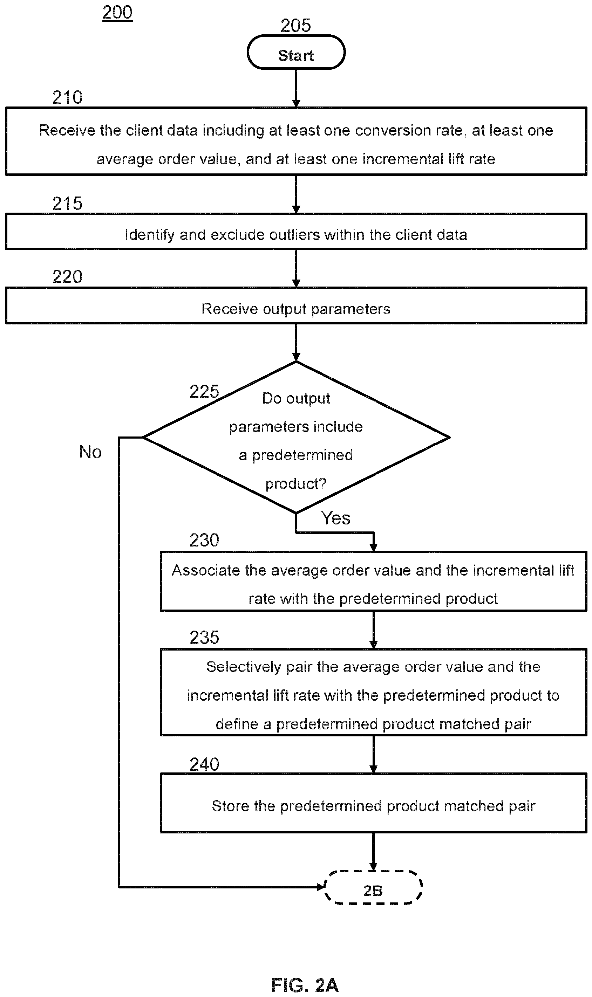

An embodiment of the invention, as shown and described by the various figures and accompanying text, provides a method and system for generation of performance analysis of digital advertising carried out on a global communications network that is accessible by consumers. FIGS. 2A-2D are a flowchart of an exemplary process 200. In some implementations, one or more process block of FIGS. 2A-2D may be performed by a digital advertising performance analysis system 100.

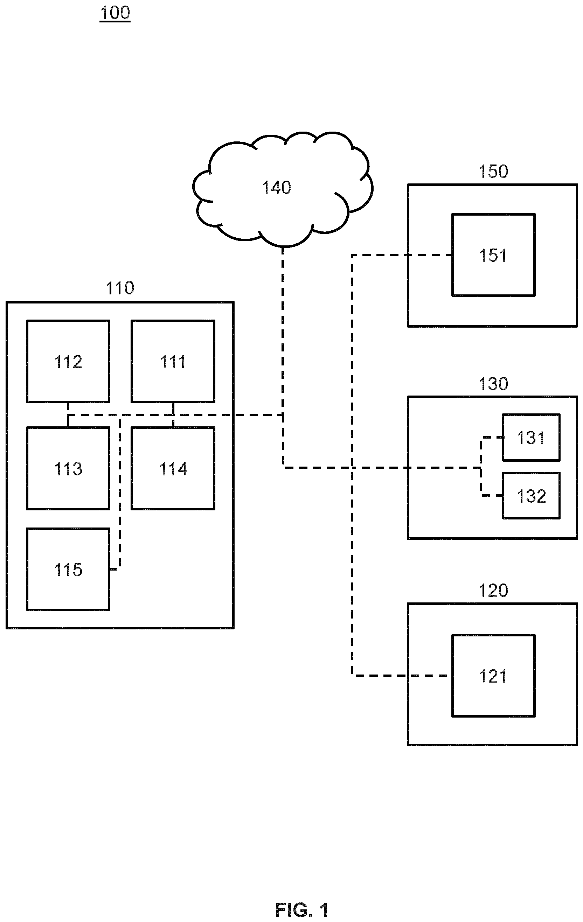

Initially referring to FIG. 1, the digital advertising performance analysis system 100 may include a server 110. The digital advertising analysis system 100 may be used to connect to a global communications network that is accessible by consumers. The digital advertising analysis system 100 illustrated in FIG. 1 may be used to operate the computer implemented system according to the present invention for generation of performance analysis of digital advertising to be carried out on a global communications network that is accessible by consumers. The server 110 may include a processor 111, a storage device 112, a memory unit 113, a network device 114, and a power supply 115. The power supply 115 may be in communication with the processor 111, the storage device 112, the memory unit 113, and the network device 114. The power supply 115 may supply electrical power to the processor 111, the storage device 112, the memory unit 113, and the network device 114. The power supply 115 may comprise an electrical outlet plug, a power regulator, a rectifier, a battery, a power brick, an electrical power generator, and any other power unit capable to supply, regulate, and/or manage power that can be used as the power supply 115 as understood by those skilled in the art.

The network device 114 may be in communication with the processor 111, the storage device 112, the memory unit 113, the power supply 115, a third-party database 120, a receiver 130, at least one client database 150, and a network 140. The network device 114 may control, manage, interpret, and/or enable communication with and between the processor 111, the storage device 112, the memory unit 113, the power supply 115, the third-party database 120, the receiver 130, the at least one client database 150, and the network 140. The communication between the network device 114, the processor 111, the storage device 112, the memory unit 113, the power supply 115, the third-party database 120, the receiver 130, the at least one client database 150, and the network 140, may comprise computer readable information, instructions, code, and/or data. The network device 114 may comprise a switch, bridge, router, firewall, repeater, gateway, hub, modem, access point, network adapter, and any other device that can be used at the network device 114 to control, manage, interpret, and/or enable communication with and between the processor 111, the storage device 112, the memory unit 113, the power supply 115, the third-party database 120, the receiver 130, the at least one client database 150, and the network 140 as understood by those skilled in the art.

The network 140 may be in communication with the server 110, the processor 111, the storage device 112, the memory unit 113, the network device 114, the power supply 115, the third-party database 120, the receiver 130, and the at least one client database 150. The network 140 may regulate, manage, control, facilitate, and enable the communication to, from, and between the server 110, the processor 111, the storage device 112, the memory unit 113, the network device 114, the power supply 115, the third-party database 120, the receiver 130, and the at least one client database 150. The network 140 may comprise a global communications network, a local access network (LAN), a personal area network (PAN), a wireless local area network (WLAN), a metropolitan area network (MAN), a wide area network (WAN), a storage area network (SAN), a virtual private area network (VPN), a satellite network, a cellular network, a landline network, a wireless fidelity (Wi-Fi) network, and any other communication network that can be used as the network 140 to regulate, manage, control, facilitate, and enable the communication to, from, and between the server 110, the processor 111, the storage device 112, the memory unit 113, the network device 114, the power supply 115, the third-party database 120, the receiver 130, and the at least one client database 150 as understood by those skilled in the art.

The storage device 112 may be in communication with the processor 111, the memory unit 113, the network device 114, and the network 140. The storage device 112 may house, store, read, write, interpret, send, and/or receive computer readable communications to and from with the processor 111, the memory unit 113, the network device 114, and the network 140. The computer readable communications may comprise computer readable information, code, data, instructions, and/or information. The storage device 112 may comprise one or more of a non-volatile computer readable storage unit, a hard disk drive (HDD) storage, solid-state drive (SSD) storage, flash storage, computer cloud storage, floppy disk drive storage, compact disk (CD) storage, magnetic tape storage, random access memory (RAM) disk storage, and any other computer data/information storage unit that can be used as the storage device 112 as understood by those skilled in the art. The storage device 112 may include data and instructions that may be sent to, received by, and performed by the processor 111. For example, and without limitation, the data and instructions sent to the processor 111, received by the processor 111, and performed by the processor 111 may include a method 200 aspect of an embodiment of the present invention. Details on the method 200 aspects of the present invention follow further below.

The memory unit 113 may be in communication with the storage device 112 and the processor 111. The memory unit 113 may receive, store, and send computer readable data, instructions, code, and information to, from, and between the storage device 112 and the processor 111. The memory unit 113 may comprise non-volatile computer readable memory, volatile computer-readable memory, cache memory, random access memory (RAM), dynamic RAM (DRAM), static RAM (SRAM), Rambus DRAM (RDRAM), Current Rambus DRAM (CRDRAM), Direct Rambus DRAM (DRDRAM), read-only memory (ROM), programmable ROM (PROM), erasable PROM (EPROM), electrically EPROM (EEPROM), virtual memory and any other memory component that may be used as the memory unit 113 to receive, store, and send computer readable data, instructions, code, and information to, from, and between the storage device 112 and the processor 111 as understood by those skilled in the art.

The processor 111 may be in communication with the memory unit 113, the storage device 112, the network device 114, the power supply 115, the network 140, the third-party database 120, the receiver 130, and the at least one client database 150. The processor 111 may be configured to send, receive, interpret, operate, and/or perform operations based on and/or responsive to computer readable instructions, code, data, and information received from the memory unit 113, the storage device 112, the network device 114, the power supply 115, the network 140, the third-party database 120, the receiver 130, and the at least one client database 150. The processor 111 may comprise a central processing unit (CPU), microcontroller (MCU), graphics processing unit (GPU), field programmable gate array (FPGA), arithmetic logic unit (ALU), microprocessor, control unit (CU), address generation unit (AGU), memory management unit (MMU), and any other computational unit that may be used as the processor 111 as understood by those skilled in the art. The processor 111 may be configured to perform one or more method 200 aspects of an embodiment of the present invention. Details on the method 200 aspects of the present invention follows further below.

The third-party database 120 may be in communication with the network 140, the server 110, the processor 111, and the network device 114. Communication between the third-party database 120 and the server 110, the processor 111, and the network device 114 may be via the network 140, and the communication between the third-party database 120 and the server 110 and processor 111 may be via the network 140 and the network device 114. The third-party database 120 may comprise third-party data 121. The third-party data 121 may be housed, carried, and/or stored by the third-party database 120. The third-party database 120 may send the third-party data 121 to the server 110 and/or the processor 111, which may be sent via the network device 114 and/or the network 140. The server 110 and/or processor 111 may receive the third-party data 121 from the third-party database 120.

The third-party data 121 may comprise data relating to digital advertisement performance relating to digital advertising of at least one advertisement area. An advertisement area may include one or more of a predetermined product or product type, a predetermined advertiser group, a predetermined market group, a predetermined demographic type, a predetermined geographic area, a predetermined publisher group, and a predetermined consumer type. An advertisement area may further comprise one or more of the number of one or more products sold, the price of one or more products, the number of clicks on a publisher's website relating to one or more products, and the number of internet searches conducted relating to one or more products or advertisers.

The receiver 130 may be in communication with the server 110, the processor 111, the network device 114, and the network 140. The communication between the receiver 130 and the server 110, the processor 111, and the network device 114 may be via the network 140, and the communication between the receiver 130 and the server 110 and the processor 111 may be via the network device 114 and/or the network 140. The receiver 130 may send and/or receive computer readable instructions, code, data, and/or commands to and from the server 110 and/or processor 111. The receiver 130 may include consumer output parameters selectable by a consumer, which may be sent to, and received by, the server 110 and/or processor 111, to define a selected consumer output parameter. The consumer output parameters selectable by a user via the receiver 130 may include an advertisement area as defined and described above.

The receiver may include an input device 132. The input device 132 may be in communication with the receiver 130. The input device 132 may also be in communication with the server 110 and/or the processor 111, which may be communication via the network 140 and/or the network device 114 of the server 110. The input device 132 may be operable by a user to input selections with the receiver 130. The input selections may include, without limitation, selecting consumer output parameters as defined and described above. The input device 132 may comprise a keyboard, mouse, track wheel, touch-screen display, game controller, joystick, track pad, speech recognition device, and any other input component that may be used as the input device 132 that is operable by a user to input selections to and with the receiver 130 as understood by those skilled in the art.

The receiver 130 may include a display unit 131. The receiver 130 and/or display unit 131 may be configured to display data received, such as, display data received from the server 110 and/or the processor 111. The data displayed on the receiver 130 may include, without limitation, data relating to an aggregated media value score and/or a score comparison that may be received from the server 110 and/or the processor 111. Details on the aggregated media value score and the score comparison follows further below. The receiver 130 and/or display unit 131 may include a graphical user interface and/or graphical display that may display the aggregated media value score and/or a score comparison and that may display the selectable consumer output parameters which a consumer may operate the input device 132 to select.

The at least one client database 150 may be in communication with the server 110, the processor 111, the network device 114, and the network 140. The communication between the at least one client database 150 and the server 110, the processor 111, the network device 114 may be via the network 140, and the communication between the at least one client database 150 and the server 110 and/or the processor 111 may be via the network 140 and/or the network device 114. The at least one client database 150 may include client data 151 stored thereon. The at least one client database 150 may be configured to store, read, write, transmit, and/or send the client data 151 to the server 110 and/or the processor 111.

The client data 151 may include data relating to the business and sales of one or more clients and/or publishers which may operate and advertise online retail services over a network or internet that is accessible to customers and prospective customers. For example, and without limitation, the client data 151 may include data relating to one or more of a conversion rate, an average order value, and incremental lift rate, return on digital advertisement spending data, incremental return on digital advertisement spending data, number of products sold via a digital marketplace, produce price, website clicks, digital search engine data, product type, digital publisher type, legacy search conversion rate, legacy search average order value, revenue-per-click, revenue-per-click index, and a seasonal factor.

The conversion rate may relate to the total number of visitors on a website that take a desired action, as defined further above, along with the total number of clicks on that website. The conversion rate may include one or more monthly conversion rates and one or more annual conversion rates, each of which may relate to a single publisher or a plurality of publishers. In some embodiments of the present invention, the processor 111 may be configured to determine a conversion rate seasonal factor based on at least one monthly conversion rate and at least one annual conversion rate.

The average order value may relate to the average monetary amount spent each time a customer places an order on a webpage, website, mobile app, or similar or equivalent on-line service via a network, as defined further above. The average order value may include one or more monthly average order values and one or more annual average order values, each of which may relate to a single publisher or a plurality of publishers. In some embodiments of the present invention, the processor 111 may be configured to determine an average order value seasonal factor based on at least one monthly average order value and at least one annual average order value.

The incremental lift rate may relate to an incremental measurement showing projected changes in marketing impact in response to a change of marketing strategy, as defined further above. The incremental lift rate may include one or more monthly incremental lift rates and one or more annual incremental lift rates, each of which may relate to a single publisher or a plurality of publishers. In some embodiments of the present invention, the processor 111 may be configured to determine an incremental lift rate seasonal factor based on at least one monthly incremental lift rate and at least one annual incremental lift rate.

Considering the above description, and continuing to refer to FIG. 1, the features, advantages, and goals of an embodiment of the prevent invention directed to a digital advertising performance analysis system 100 is now further described. The processor 111 may be configured to receive client data 151 from the at least one client database 150, with the client data 151 including at least one a conversion rate, at least one average order value, and at least one incremental lift rate, which may each be defined as a client data subset.

The processor 111 may be further configured to identify a conversion rate score based on the one or more conversion rates of the client data 151. For example, and without limitation, the processor 111 may be configured to identify the conversion rate score based on the conversion rate relating to the total number of conversions and total number of valid clicks or total number of webpage visitors, along with a legacy conversion rate and a conversion rate seasonal factor. The processor 111 may be configured to identify the conversion rate score on a scale starting from one and capping off at one-hundred to eliminate outliers in the conversion rate of the client data 151.

The processor 111 may be configured to identify an average order value score based on the one or more average order values of the client data 151. For example, and without limitation, the processor 111 may be configured to identify an average order value score based on an average order value relating to a sum purchase value and the total number of conversions, along with a legacy average order value and an average order value seasonal factor. The processor 111 may be configured to identify the average order value score on a scale starting from one and capping off at one-hundred to eliminate outliers in the average order value of the client data 151.

The processor 111 may be configured to identify an incremental lift rate score based on the at least one incremental lift rate of the client data 151. For example, and without limitation, the processor 111 may be configured to identify an incremental lift rate score based on an incremental lift rate relating to revenue-per-click and an index that relates to revenue-per-click by category, media product, and timeline along with a total score and an incremental lift rate seasonal factor. The total score may comprise a predetermined value based on the average order value, conversion rate, and revenue-per-click of the client data 151. The processor 111 may be configured to identify the incremental lift rate score on a scale starting from one and capping off at one-hundred to eliminate outliers in the incremental lift rate of the client data 151.

The processor 111 may yet be further configured to generate an aggregate media value score that may be based on a selective combination of the conversion rate score, the average order value score, and the incremental lift rate score. The processor 111 may be configured to broadcast the aggregated media value score to a receiver 130 that may display the aggregated media value score to a user of the receiver 130, which may be displayed via a display unit 131 of the receiver 130.

In some embodiments of the present invention, the processor 111 may be configured to selectively broadcast and/or selectively provide access to the aggregated media score. For example, and without limitation, the processor 111 may be configured selectively broadcast and/or selectively provide access to the aggregated media score based upon a user providing payment via the receiver 130, and/or based upon the processor 111 being operated to provide one or more users of a receiver 130 selective access to the aggregated media score.

In some embodiments of the present invention, the client data 151 received by the processor 111 from the at least one client database 150 may include a return on digital advertisement spending data, incremental return on digital advertisement spending data, number of products sold via a digital marketplace, product price, website clicks, digital search engine data, product type, and/or a digital publisher type, which may each be defined as a client data subset. Moreover, in some embodiments of the present invention, the processor 111 may be configured to identify outliers included in the client data 151 and/or the client data subsets based upon outlier factors, to define identified client data outliers. The processor 111 may also be configured to exclude the identified client data outliers from the received client data 151.

The outlier factors may include one or more predetermined date and/or time selections, one or more predetermined product selections, one or more geographical location selections, and/or statistical extreme parameters for each of the client data subsets of the client data 151. A predetermined dated may include, for example, and without limitation, the date and time a disrupting event took place, such as, a tornado, a hurricane, a riot, a power outage, an act of terrorism, a stock market crash, or any other disrupting event as understood by those skilled in the art. A statistical extreme parameter may be defined as, without limitation, a client data subset of the client data 151 being greater than or equal to a statistical high point that may be predetermined or identified by the processor 111 that may be with or by reference to similar client data subsets of the client data 151. A statistical extreme parameter may also be defined as, and without limitation, a client data subset of the client data 151 being less than or equal to a statistical low point that may be predetermined or identified by the processor 111 that may be with or by reference to similar client data subsets of the client data 151.

In some embodiments of the present invention, the processor 111 may be configured to associate, and selectively pair, an average order value and an incremental lift rate of the client data 151 received with a predetermined product to define a predetermined product matched pair. The processor 111 may be further configured to send the predetermined product matched pair to the at least one client database 150 and/or the storage device 112 to be stored thereby. In some embodiments of the present invention, the processor 111 may be configured to generate the aggregated media value score that may be based on a selective combination of the conversion rate score, the average order value score, the incremental lift rate score, and the predetermined product matched pair.

In some embodiments of the present invention, the processor 111 may be configured to associate, and selectively pair, an average order value and an incremental lift rate of the client data 151 received, with a predetermined product to define a predetermined advertiser group matched pair. The processor 111 may be further configured to send the predetermined advertiser group matched pair to the at least one client database 150 and/or the storage device 112 to be stored thereby. In some embodiments of the present invention, the processor 111 may be configured to generate the aggregated media value score that may be based on a selective combination of the conversion rate score, the average order value score, the incremental lift rate score, and the predetermined advertiser group matched pair.

In some embodiments of the present invention, the client data 151 may further comprise one or more of a legacy search conversion rate, a legacy search average order value, a revenue per click, a revenue per click index, and a seasonal factor. The processor 111 may be configured to identify the conversion rate score based upon a selective combination of the conversion rate(s), the legacy search conversion rate(s), and the seasonal factor. The processor 111 may also be configured to identify the average order value score based on an analysis of a selective combination of the average order value(s), the legacy search average order value, and the seasonal factor. The processor 111 may yet further be configured to identify the incremental life rate score based on an analysis of a selective combination of the incremental lift rate, the revenue per click, the revenue per click index, and a seasonal factor.

In some embodiments of the present invention, the processor 111 may be configured to identify an integration score. The processor 111 may be further configured to generate the aggregated media value score based on an analysis of a selective combination of the conversion rate score, the average order value score, the incremental lift rate score, and the integration score.

In some embodiments of the present invention, the processor 111 may be configured to access a third-party database 120 that may contain third-party data 121 that may relate to digital advertisement performance, which may relate to digital advertising of a product or predetermined product. The processor 111 may be configured to request and/or receive the digital advertisement performance of the third-party data 121 from the third-party database 120. The processor 111 may also be configured to compare the digital advertisement performance with the aggregated media value score.

The aggregated media value score may have a format type. The processor 111 may be configured to convert the third-party data 121 to the format type of the aggregated media value score, which may be defined as a converted third-party data. The processor 111 may be further configured to generate a score comparison based on the aggregated media value score and the converted third-party data. The processor 111 may yet be further configured to broadcast the score comparison to a receiver 130. The processor 111 may be configured to selectively broadcast and/or selective provide access to the score comparison to a receiver 130 as detailed and described above for a processor 111 being configured to selectively broadcast and/or selective provide access to the aggregated media value score to a receiver 130.

Referring now to FIGS. 2A-2D, additional details regarding the functions of a digital advertising performance analysis system 100 according to an embodiment of the present invention are now discussed. More specifically, method aspects of the present invention relating to operation of the system 100 may comprise the steps illustratively shown in the process 200 depicted in FIGS. 2A-2D. Starting at Block 205 and continuing to Block 210, the system 100 may receive client data 151 that may include at least one conversion rate, at least one average order value, and/or at least one incremental lift rate. Although Block 210 illustrates that the client data 151 may include data relating to a conversion rate, and average order value, and or an incremental lift rate, those skilled in the art will appreciate that the client data 151 may also include any other information or data that may be desired to be analyzed relating to metrics that can illustrate effectiveness of digital media performance.

The client data 151 may be received by the system 100 from at least one client database 150, which may be received via a network 140. The system 100 may then continue to Block 215 and identify and exclude outliers within the client data 151, as described further above for a processor 111 of the system 100. The system 100 may then continue to Block 220 and receive output parameters, which may be received by the system 100 from a receiver 130, which may be via the network 140.

The system 100 may then continue to Block 225 and determine whether the output parameters received include a predetermined product. If, at Block 225, the system 100 determines that the output parameters include a predetermined product, the system 100 may then continue to Block 230. At Block 230, the system 100 may associate the average order value and the incremental lift rate with the predetermined product. The system 100 may then continue to Block 235 and selectively pair the average order value and the incremental lift rate with the predetermined product to define a predetermined product matched pair.

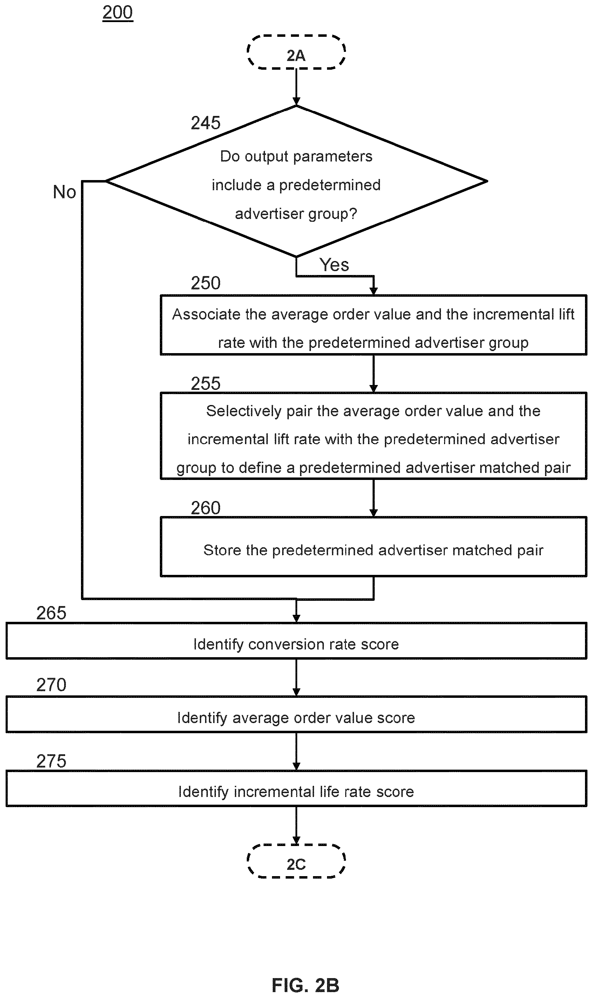

The system 100 may then continue to Block 240 and store the predetermined product matched pair, which may be stored in a storage device 112 of the system 100 or in at least one client database 150. The system 100 may then continue to Block 245 illustratively shown in FIG. 2B. If, however, at Block 225 the system 100 determines that the output parameters do not include a predetermined product, then the system 100 may directly continue the process 200 from Block 225 to Block 245.

Now specifically referring to FIG. 2B, at Block 245 the system 100 may determine whether the output parameters include a predetermined advertiser group. If at Block 245 the system 100 determined that the output parameters include a predetermined advertiser group, the system 100 may then continue to Block 250. At Block 250, the system 100 may associated the average order value and the incremental lift rate with the predetermined advertiser group.

The system 100 may then continue to Block 255 and selectively pair the average order value and the incremental lift rate with the predetermined advertiser group, which may be defined as a predetermined advertiser matched pair. Then the system 100 may continue to Block 260 and store the predetermined advertiser matched pair, which may be stored in a storage device 112 of the system 100 and/or in at least one client database 150. Then the system 100 may continue to Block 265. If, however, at Block 245 the system 100 determines that the output parameters do not include a predetermined advertiser group, then the system 100 may directly continue the process 200 from Block 245 to Block 265.

At Block 265 the system 100 may identify a conversion rate score, which may be identified by the system 100 based on the at least one conversion rate. The system 100 may then continue to Block 270 and identify an average order value score, which may be identified by the system 100 based on the at least one average order value. The system 100 may then continue to Block 275 and identify an incremental lift rate score, which may be identified by the system 100 based on the at least one incremental lift rate.

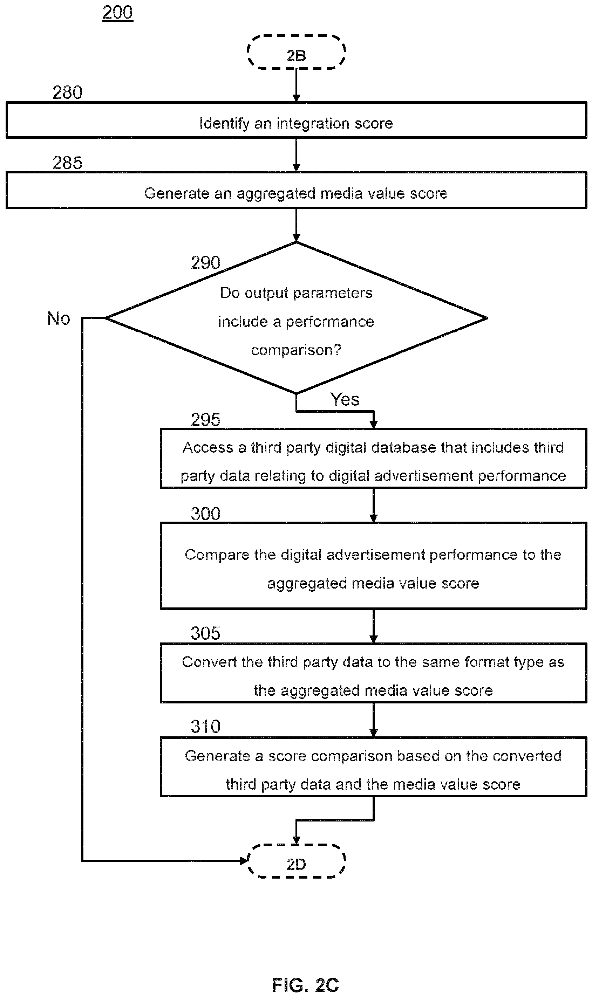

Now additionally referring to FIG. 2C, the system 100 may continue the process 200 to Block 280 and identify an integration score. The system 100 may then continue to Block 285 and generate and aggregated media value score. The device may then continue the process 200 to Block 290 and determine whether the output parameters include a performance comparison. If at Block 290 the system 100 determines that the output parameters include a performance comparison, then the system 100 may continue the process 200 to Block 295. At Block 295, the system 100 may access a third-party database 120, which may include third-party data 121 that may relate to digital advertisement performance which may relate to digital advertising of a predetermined product.

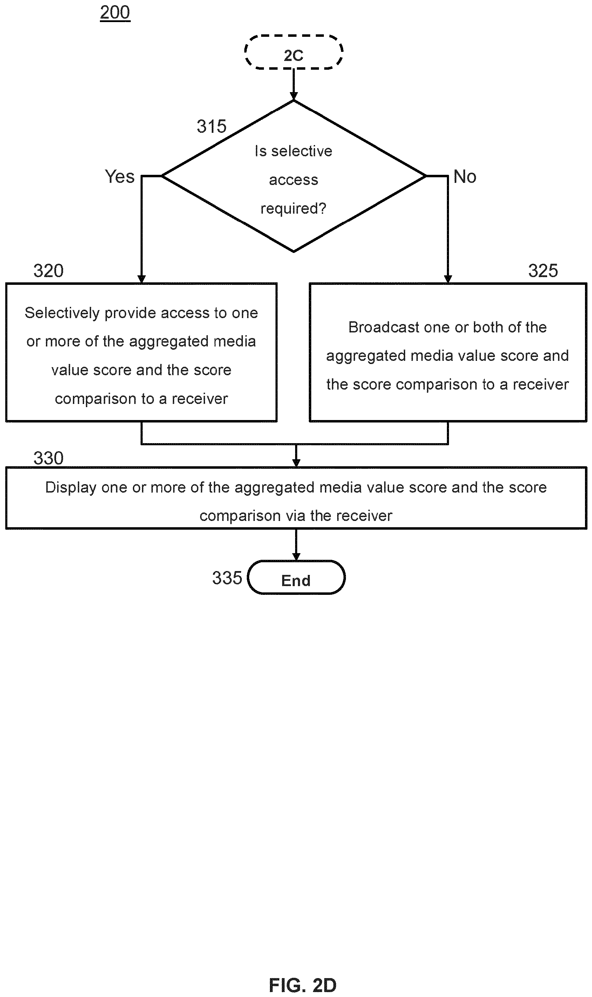

The system 100 may then continue to Block 300 and compare the digital advertisement performance to the aggregated media value score. The aggregated media value score may have a format type. The system 100 may then continue to Block 305 and convert the third-party data 121 to the format type of the aggregated media value score. The system 100 may then continue to Block 310 and generate a score comparison based on the converted third-party data 121 and the aggregated media value score. Then the system 100 may continue the process 200 to Block 315, illustratively shown in FIG. 2D.

Now additionally referring to FIG. 2D, if, however, at Block 290 the system 100 determines that the output parameters do not include a performance comparison, then the system 100 may directly continue the process 200 from Block 290 to Block 315. At Block 315 the system 100 may determine whether selective access is required, with selective access being as defined and described further above for the embodiments of the present invention. If at Block 315 the device determines that selective access is not required, then the system 100 may continue the process to Block 325 and broadcast one or both of the aggregated media value score and the score comparison, which may be broadcasted to one or more receivers 130. The system 100 may then continue the process 200 to Block 330.

If, however, at Block 315 the system 100 determines that selective access is required, the system 100 may then directly continue the process 200 directly from Block 315 to Block 320. At Block 320, the system 100 may selectively provide access to one or more of the aggregated media value score and the score comparison, which may be selective access provided to one or more receivers 130. The system 100 may then continue to Block 335 and end the process 200.

Although FIGS. 2A-2D show example block of process 200, in some implementations, process 200 may include additional blocks, fewer blocks, different blocks, or differently arranged blocks than those depicted in FIGS. 2A-2B. Additionally, or alternatively, two or more of the blocks of process 200 may be performed in parallel.

Some of the illustrative aspects of the present invention may be advantageous in solving the problems herein described and other problems not discussed which are discoverable by a skilled artisan.

While the above description contains much specificity, these should not be construed as limitations on the scope of any embodiment, but as exemplifications of the presented embodiments thereof. Many other memory combinations and variations are possible within the teachings of the various embodiments. While the invention has been described with reference to exemplary embodiments, it will be understood by those skilled in the art that various changes may be made, and equivalents may be substituted for elements thereof without departing from the scope of the invention. In addition, many modifications may be made to adapt a particular situation or material to the teachings of the invention without departing from the essential scope thereof. Therefore, it is intended that the invention is not limited to the particular embodiment disclosed as the best or only mode contemplated for carrying out this invention, but that the invention will include all embodiments falling within the scope of the appended claims. Also, in the drawings and the description, there have been disclosed exemplary embodiments of the invention and, although specific terms may have been employed, they are unless otherwise stated used in a generic and descriptive sense only and not for purposes of limitation, the scope of the invention therefore not being so limited. Moreover, the use of the terms first, second, etc. do not denote any order or importance, but rather the terms first, second, etc. are used to distinguish one element from another. Furthermore, the use of the terms a, an, etc. do not denote a limitation of quantity, but rather denote the presence of at least one of the referenced item.

Thus the scope of the invention should be determined by the appended claims and their legal equivalents, and not by the examples given.

## Claims

1. A computer implemented system for generation of performance analysis of digital advertising carried out on a global communications network that is accessible by consumers, the system comprising:
at least one client database comprising client data stored thereon; and
a processor in communication with the at least one client database;
wherein the client data includes at least one conversion rate, at least one average order value, and at least one incremental lift rate; and
wherein the processor is configured to:
receive the client data from the at least one client database;
identify a conversion rate score based on the at least one conversion rate;
identify an average order value score based on the at least one average order value;
identify an incremental lift rate score based on the at least one incremental lift rate;
generate an aggregated media value score based on a combination of the conversion rate score, the average order value score, and the incremental lift rate score; and
broadcast the aggregated media value score to a receiver.

2. The system of claim 1, wherein the processor is further configured to selectively provide access to the aggregated media value score via the receiver; and display the aggregated media value score via the receiver;
or
, wherein the client data further comprises at least one of return on digital advertisement spending data, incremental return on digital advertisement spending data, number of products sold via a digital marketplace, product price, website clicks, digital search engine data, product type, and digital publisher type, defined as a client data subset; and wherein the processor is further configured to generate the aggregated media value score based upon a combination of the media data subset, the conversion rate score, the average order value score, and the incremental lift rate score, and
preferably, wherein the processor is further configured to identify and exclude outliers within the client data.

3. The system of claim 1, wherein the average order value, and the incremental lift rate are each associated with a predetermined product; and wherein the average order value and the incremental lift rate are selectively paired with the predetermined product and stored in the at least one client database as a predetermined product matched pair;
or
wherein the average order value, and the incremental lift rate are associated with a predetermined advertiser group; and wherein the average order value and the incremental lift rate are selectively paired with the predetermined advertiser group and stored in the at least one client database as a predetermined advertiser group matched pair.

4. The system of claim 1, wherein the client data further comprises data relating to a legacy search conversion rate, a legacy search average order value, a revenue per click, a revenue per click index, and a seasonal factor.

5. The system of claim 4, wherein identifying the conversion rate score is further based on an analysis of a selective combination of the at least one conversion rate, the legacy search conversion rate, and the seasonal factor;
or
wherein identifying the average order value score is further based on an analysis of a selective combination of the at least one average order value, the legacy search average order value, and the seasonal factor.
or
wherein identifying the incremental lift rate score is further based on an analysis of a selective combination of the incremental lift rate, the revenue per click, the revenue per click index, and the seasonal factor;
or
wherein the processor is further configured to identify an integration score; and wherein generating the aggregated media value score is further based on an analysis of a selective combination of the conversion rate score, the average order value score, the incremental lift rate score, and the integration score.

6. The system of claim 1, wherein the processor is further configured to access a third-party digital database containing third-party data relating to digital advertisement performance for digital advertising of a predetermined product, and receive the data relating to the digital advertisement performance; wherein the processor is further configured to compare the data relating to the digital advertisement performance to the aggregated media value score; wherein the aggregated media value score has a format type; wherein the processor is configured to convert the third-party data to the same format type of the aggregated media value score; wherein the processor is further configured to generate a score comparison based on the aggregated media value score and the converted third-party data; and wherein the processor is further configured to broadcast the score comparison to the receiver.

7. A computer implemented method for generating performance analytics of digital advertising carried out on a global communications network that is accessible by consumers, the method comprising:
receiving client data that is stored on at least one client database, wherein the client data includes at least one conversion rate, at least one average order value, and at least one incremental lift rate;
identifying a conversion rate score based on the at least one conversion rate;
identifying an average order value score based on the at least one average order value;
identifying an incremental lift rate score based on the at least one incremental lift rate;
generating an aggregated media value score based on a combination of the conversion rate score, the average order value score, and the incremental lift rate score; and
broadcasting the aggregated media value score to a receiver.

8. The method of claim 7, further comprising selectively providing access to the aggregated media value score via the receiver; and displaying the aggregated media value score via the receiver.

9. The method of claim 7, wherein the client data further comprises at least one of return on digital advertisement spending data, incremental return on digital advertisement spending data, number of products sold via a digital marketplace, product price, website clicks, digital search engine data, product type, and digital publisher type, defined as a client data subset; and wherein generating the aggregated media value score based upon a combination of the media data subset, the conversion rate score, the average order value score, and the incremental lift rate score,
preferably, said method further comprises identifying and excluding outliers within the client data received from the at least one client database.

10. The method of claim 7, further comprising associating each of the average order value and the incremental lift rate with a predetermined product; selectively pairing the average order value and the incremental lift rate with the predetermined product to define a predetermined product matched pair; and storing the predetermined product matched pair in the at least one client database;
or
further comprising associating each of the average order value and the incremental lift rate with a predetermined advertiser group; and selectively pairing the average order value and the incremental lift rate with the predetermined advertiser group to define a predetermined advertiser matched pair; and storing the predetermined advertiser matched pair in the at least one client database.

11. The method of claim 7, wherein the client data further comprises data relating to a legacy search conversion rate, a legacy search average order value, a revenue per click, a revenue per click index, and a seasonal factor.

12. The method of claim 7, wherein identifying the conversion rate score is further based on an analysis of a selective combination of the at least one conversion rate, the legacy search conversion rate, and the seasonal factor;
or
wherein identifying the average order value score is further based on an analysis of a selective combination of the at least one average order value, the legacy search average order value, and the seasonal factor.

13. The method of claim 11, wherein identifying the incremental lift rate score is further based on an analysis of a selective combination of the incremental lift rate, the revenue per click, the revenue per click index, and a seasonal factor.

14. The method of claim 11, further comprising identifying an integration score; analyzing a selective combination of the conversion rate score, the average order value score, the incremental lift rate score, and the integration score; and identifying the aggregated media value score is further based on the analysis of the selective combination.

15. The method of claim 7, further comprising accessing a third-party digital database that contains third-party data relating to digital advertisement performance for digital advertising of a predetermined product; comparing the data relating to the digital advertisement performance to the aggregated media value score, the aggregated media value score having a format type; converting the third-party data to the same format type of the aggregated media value score; generating a score comparison based on the aggregated media value score and the converted third-party data; and broadcasting the score comparison to the receiver.
